(19) Europäisches Patentamt
European Patent Office
Office européen des brevets

(11) EP 4 588 946 A1

(12) **EUROPEAN PATENT APPLICATION**
published in accordance with Art. 153(4) EPC

(43) Date of publication:
**23.07.2025 Bulletin 2025/30**

(21) Application number: **23865614.4**

(22) Date of filing: **15.09.2023**

(51) International Patent Classification (IPC):
***C08F 236/04*** (2006.01) ***B60C 1/00*** (2006.01)
***C08F 212/04*** (2006.01) ***C08F 220/06*** (2006.01)
***C08K 3/013*** (2018.01) ***C08K 3/36*** (2006.01)
***C08L 9/00*** (2006.01)

(52) Cooperative Patent Classification (CPC):
**B60C 1/00; C08F 212/04; C08F 220/06; C08F 236/04; C08K 3/013; C08K 3/36; C08L 9/00**

(86) International application number:
**PCT/JP2023/033680**

(87) International publication number:
**WO 2024/058265 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **16.09.2022 JP 2022147890**

(71) Applicant: **ENEOS Materials Corporation**
**Tokyo 105-7109 (JP)**

(72) Inventor: **SHIN, Kanyou**
**Tokyo 105-7109 (JP)**

(74) Representative: **TBK**
**Bavariaring 4-6**
**80336 München (DE)**

(54) **CONJUGATED DIENE POLYMER, POLYMER COMPOSITION, CROSSLINKED PRODUCT AND TIRE**

(57) A conjugated diene-based polymer which includes a repeating unit (a) derived from a conjugated diene compound in a relative amount of 45 to 99 mass%; a repeating unit (b) derived from an aromatic vinyl compound in a relative amount of 0 to 40 mass%; and a repeating unit (c) comprising a partial structure represented by formula (1) in a relative amount of 1 to 30 mass%, each relative amount based on the entire mass of all the repeating units; and a cross-linked product which is obtained by cross-linking of the polymer.

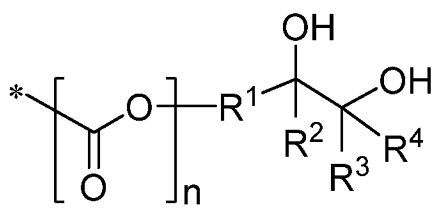

(1)

EP 4 588 946 A1

## Description

### Technical Field

[Cross-Reference to Related Applications]

The present application claims a priority from Japanese Patent Application No. 2022-147890 filed on September 16, 2022, the entirety of the disclosure of which is incorporated herein by reference.
The present disclosure relates to a conjugated diene-based polymer, to a polymer composition, to a cross-linked product, and to a tire.

### Background Art

Conjugated diene-based polymers such as styrenebutadiene rubber (SBR) exhibit excellent properties such as high heat resistance, high wear resistance, high mechanical strength, and good moldability, and find wide uses as rubber products including pneumatic tires, rubber vibration isolators, and rubber hoses. Generally, conjugated diene-based polymers are produced through emulsion polymerization or solution polymerization.
Patent Document 1 discloses a modified conjugated diene-based polymer which includes a butadiene unit and a styrene unit and which has an modified end, as a conjugated diene-based polymer produced through solution polymerization. Patent Document 2 discloses production of a silica-added rubber composition which contains a conjugated diene-based polymer produced from 1,3-butadiene and styrene through emulsion polymerization, a cationic polymer (e.g., polydiallylmethylamine or an ammonium salt thereof), and silica.

### Prior Art Documents

### Patent Documents

Patent Document 1: Japanese Patent Application Laid-Open (kokai) No. 2019-182996
Patent Document 2: Japanese Patent Application Laid-Open (kokai) No. 2004-256801

### Summary of the Invention

### Problems to be Solved by the Invention

Under increased consumers' awareness of environmental conditions, there is demand for further enhancement of mechanical strength of a rubber material to save material and energy.
The present disclosure has been established so as to attain the aforementioned object. Thus, a main object of the present disclosure is to provide a cross-linked product having high mechanical strength, and a conjugated diene-based polymer which can form such a cross-linked product.

### Means for Solving the Problems

In one aspect of the present disclosure, there is provided a conjugated diene-based polymer including a repeating unit (a) derived from a conjugated diene compound in a relative amount of 45 to 99 mass%; a repeating unit (b) derived from an aromatic vinyl compound in a relative amount of 0 to 40 mass%; and a repeating unit (c) derived from a monomer having a partial structure represented by formula (1) in a relative amount of 1 to 30 mass%, each relative amount based on the entire mass of all the repeating units.

[F1]

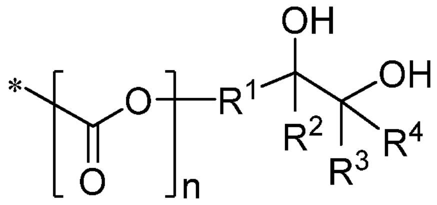

(1)

(In the formula (1), n is 0 or 1; $R^1$ represents a single bond or a C1 to C20 hydrocarbylene group; each of $R^2$ to $R^4$ independently represents hydrogen or a C1 to C20 hydrocarbyl group; and * represents a chemical bond to a polymer main chain.)

In another aspect of the present disclosure, there is provided a polymer composition containing the conjugated diene-based polymer and a cross-linking agent.

In still another aspect of the present disclosure, there is provided a cross-linked product produced from the polymer composition.

In yet another aspect of the present disclosure, there is provided a tire employing the cross-linked product at least in a part thereof.

Advantageous Effects of the Invention

According to the present disclosure, there can be provided a conjugated diene-based polymer that can yield a cross-linked product having high mechanical strength.

Modes for Carrying Out the Invention

Hereinafter, the matters in relation to carrying out of the present disclosure will be described in detail. As used herein, the numerical range with an expression of "X to Y" refers to a numerical range that includes X and Y placed before and after "to" as a lower limit value and an upper limit value, respectively. Notably, those skilled in the art should understand that the present disclosure is not limited to the below-described embodiments, and also encompasses various modifications carried out, without altering the gist of the present disclosure.

<<Conjugated diene-based polymer>>

The conjugated diene-based polymer of the present disclosure is a polymer which includes a repeating unit (a) derived from a conjugated diene compound in a relative amount of 45 to 99 mass%; a repeating unit (b) derived from an aromatic vinyl compound in a relative amount of 0 to 40 mass%; and a repeating unit (c) having a partial structure represented by the aforementioned formula (1) in a relative amount of 1 to 30 mass%, each relative amount based on the entire mass of all the repeating units (hereinafter may also be referred to as a "polymer (P)"). Hereinafter, the polymer (P) will be described in detail.

·Repeating unit (a)

The repeating unit (a) is a structural unit derived from a conjugated diene compound. Examples of the conjugated diene compound include 1,3-butadiene, isoprene, 2,3-dimethyl-1,3-butadiene, 1,3-pentadiene, 1,3-hexadiene, 1,3-heptadiene, 2-phenyl-1,3-butadiene, 3-methyl-1,3-pentadiene, and 2-chloro-1,3-butadiene. Of these, 1,3-butadiene, isoprene, and 2,3-dimethyl-1,3-butadiene are preferred, from the viewpoint of achieving suitable characteristics particularly required in uses of tire. From the viewpoint of improving processability and reduction of hysteresis loss in a well-balanced manner, 1,3-butadiene is particularly preferred. The conjugated diene compound forming the repeating unit (a) may be a single species or two or more species.

In the polymer (P), the repeating unit (a) content is 45 to 99 mass%, with respect to the total amount of the repeating units forming the polymer (P) (hereinafter may also be referred to as "all the repeating units"). When the repeating unit (a) content is less than 45 mass%, processability and low hysteresis loss property are generally insufficient in application to tire uses. Also, when the repeating unit (a) content is in excess of 99 mass%, generally, the repeating unit (c) content is small in the polymer (P), failing to sufficiently achieve a strength improvement effect attained by incorporation of the repeating unit (c). Thus, the repeating unit (a) content of the polymer (P), with respect to all the repeating units forming the polymer (P), is preferably 48 mass% or more, more preferably 55 mass% or more, still more preferably 60

mass% or more, yet more preferably 65 mass% or more. Also, the repeating unit (a) content of the polymer (P), with respect to all the repeating units forming the polymer (P), is preferably 95 mass% or less, more preferably 90 mass% or less.

·Repeating unit (b)

The repeating unit (b) is a structural unit derived from an aromatic vinyl compound. Examples of the aromatic vinyl compound include styrene, 2-methylstyrene, 3-methylstyrene, 4-methylstyrene, α-methylstyrene, 2,4-dimethylstyrene, 2,4-diisopropylstyrene, vinylethylbenzene, divinylbenzene, trivinylbenzene, divinylnaphthalene, t-butoxystyrene, vinylbenzyldimethylamine, (4-vinylbenzyl) dimethylaminoethyl ether, N,N-dimethylaminoethylstyrene, N,N-dimethylaminomethylstyrene, 2-ethylstyrene, 3-ethylstyrene, 4-ethylstyrene, 2-t-butylstyrene, 3-t-butylstyrene, 4-t-butylstyrene, 5-t-butyl-2-methylstyrene, vinylxylene, vinylnaphthalene, vinylpyridine, and diphenylethylene. Of these, styrene and α-methylstyrene are preferred as the aromatic vinyl compound, from the viewpoint of achieving high effect of enhancing the mechanical strength of a polymer (rubber). The aromatic vinyl compound forming the repeating unit (b) may be a single species or two or more species.

In the polymer (P), the repeating unit (b) content of the polymer (P), with respect to all the repeating units forming the polymer (P), is 0 to 40 mass%. When the repeating unit (b) content is in excess of 40 mass%, low hysteresis loss property is generally insufficient in the case the polymer (P) is formed into a cross-linked product (specifically, cross-linked rubber). Thus, the repeating unit (b) content of the polymer (P), with respect to all the repeating units forming the polymer (P), is preferably 37 mass% or less, more preferably 35 mass% or less, still more preferably 30 mass% or less. The polymer (P) may be a polymer which includes no repeating unit (b) (i.e., the repeating unit (b) content is 0 mass%). Meanwhile, the case in which the polymer (P) is a copolymer including a conjugated diene compound unit and an aromatic vinyl compound unit is preferred, from the viewpoint of achieving a further enhanced mechanical strength of the polymer. The repeating unit (b) content of the polymer (P), with respect to all the repeating units forming the polymer (P), is preferably 1 mass% or more, more preferably 3 mass% or more, still more preferably 5 mass% or more. Notably, the repeating unit (b) content of a polymer is a value determined by means of a $^{1}$H-NMR apparatus.

·Repeating unit (c)

The repeating unit (c) is a repeating unit having a partial structure represented by the following formula (1).

[F2]

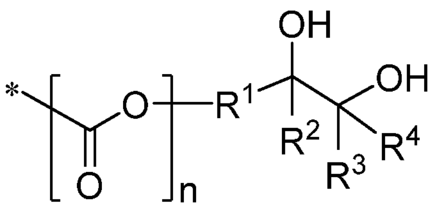

(1)

(In the formula (1), n is 0 or 1; $R^1$ represents a single bond or a C1 to C20 hydrocarbylene group; each of $R^2$ to $R^4$ independently represents hydrogen or a C1 to C20 hydrocarbyl group; and * represents a chemical bond to a polymer main chain.)

Examples of the C1 to C20 hydrocarbylene group represented by $R^1$ in the formula (1) include a C1 to C20 linear-chain or branched alkanediyl group, a C5 to C20 cycloalkylene group, a C6 to C20 arylene group, and a C7 to C20 aralkylene group.

From the viewpoint of suppressing undesired control of the motion of a partial structure represented by the aforementioned formula (1) (i.e., a side chain) so as to further enhance the mechanical strength of the cross-linked product obtained from the polymer (P), $R^1$ is preferably a single bond or a C1 to C20 linear-chain or branched alkanediyl group, more preferably a C1 to C20 linear-chain or branched alkanediyl group.

Examples of the C1 to C20 hydrocarbyl group represented by any of $R^2$ to $R^4$ include a C1 to C20 linear-chain or branched alkyl group, a C5 to C20 cycloalkyl group, a C6 to C20 aryl group, and a C7 to C20 aralkyl group.

From the viewpoint of achieving a further enhanced mechanical strength of a cross-linked product, $R^2$ is preferably a hydrogen atom or C1 to C20 linear-chain or branched alkyl group, more preferably a hydrogen atom or a C1 to C3 linear-chain or branched alkyl group.

Each of $R^3$ and $R^4$ is preferably a hydrogen atom or C1 to C20 linear-chain or branched alkyl group, more preferably a hydrogen atom or a C1 to C12 linear-chain or branched alkyl group.

In the repeating unit (c), the two hydroxy groups are respectively bound to two carbon atoms adjacent to each

other, wherein the carbon atoms form an aliphatic hydrocarbon structure. In the case where the carbon atoms to which the hydroxy groups are respectively bound form an aromatic ring, the distance between the hydroxy groups is constant. In contrast, in the case where the carbon atoms to which the hydroxy groups are respectively bound form an aliphatic hydrocarbon structure, the distance between the hydroxy groups may freely vary due to rotation of the corresponding bond. As a result, each of the two hydroxy groups in the repeating unit (c) may easily provide such a distance as to be suited for interaction with another hydroxy group or a reinforcing filler. Thus, conceivably, it is believed that higher elongation and break strength can be attained, as compared with the case in which the carbon atoms to which the hydroxy groups are respectively bound from an aromatic ring.

The repeating unit (c) is preferably a structural unit derived from a monomer having partial structure represented by the formula (1) (hereinafter may also be referred to as a "monomer (mc)"), since the partial structure represented by the formula (1) can be easily incorporated into a side chain of the polymer, and the repeating unit (c) content of the polymer (P) can be easily regulated.

Specific examples of the monomer (mc) include 1,2-dihydroxyethyl (meth)acrylate, 1,2-dihydroxypropyl (meth) acrylate, 2,3-dihydroxypropyl (meth)acrylate, 1,2-dihydroxybutyl (meth)acrylate, 2,3-dihydroxybutyl (meth)acrylate, 3,4-dihydroxybutyl (meth)acrylate, 2,3-dihydroxy-1-methylpropyl (meth)acrylate, 1,2-dihydroxy-5-ethylhexyl (meth)acrylate, 9,10-dihydroxydecyl (meth)acrylate, 4,5-dihydroxy-2-pentenoic acid, tert-butyl 4,5-dihydroxy-2-hexenate, ethyl 5,6-dihydroxy-7-octenate, methyl 5,6-dihydroxy-8-nonenate, methyl N-methyl-4,5-dihydroxy-2-octenehydroxamate, 2,3-dihydroxy-1-butene, and 24,25-dihydroxydammara-20-en-3-one.

From the viewpoint of high reactivity, n in the aforementioned formula (1) is preferably 1. Also, a dihydroxyalkyl (meth)acrylate is suitably used as the monomer (mc). The monomer (mc) forming the repeating unit (c) may be a single species or two or more species. In the present specification, the term "(meth)acrylate" encompasses acrylate and methacrylate. The term "(meth)acrylic" encompasses acrylic and methacrylic.

In the polymer (P), the repeating unit (c) content of the polymer (P), with respect to all the repeating units forming the polymer (P), is 1 to 30 mass%. When the repeating unit (c) content is less than 1 mass%, generally, the advantageous effect of the repeating unit (c) is difficult to exert, failing to sufficiently improve the mechanical strength of the polymer. When the repeating unit (c) content is in excess of 30 mass%, rubber elasticity is not generally exerted. Thus, the repeating unit (c) content of the polymer (P), with respect to all the repeating units forming the polymer (P), is preferably **1.5** mass% or more, more preferably 2 mass% or more. Also, the repeating unit (c) content of the polymer (P), with respect to all the repeating units forming the polymer (P), is preferably 20 mass% or less, more preferably 15 mass% or less, still more preferably 10 mass% or less. The structural unit (c) content of a polymer is a value determined by means of a $^1$H-NMR apparatus.

The polymer (P) may further include, as a monomer unit forming the polymer (P), a repeating unit derived from a compound (hereinafter may also be referred to as an "additional monomer") other than a conjugated diene compound, an aromatic vinyl compound, or the monomer (mc). Examples of the additional monomer include $\alpha,\beta$-unsaturated nitrile compounds such as acrylonitrile, methacrylonitrile, and $\alpha$-ethylacrylonitrile; unsaturated carboxylic acids such as (meth) acrylic acid, crotonic acid, maleic acid, fumaric acid, and itaconic acid; and unsaturated carboxylic acid esters such as methyl (meth)acrylate and ethyl (meth)acrylate. In the polymer (P), the relative amount of the repeating unit derived from the additional monomer, with respect to all the repeating units forming the polymer (P), is preferably 15 mass% or less, more preferably 5 mass% or less, still more preferably 3 mass% or less, yet more preferably 1 mass% or less, from the viewpoint of achieving suitable low hysteresis property, mechanical strength, and processability.

<Method of producing polymer (P)>

No particular limitation is imposed on the polymerization method for producing the polymer (P), and examples of the method include bulk polymerization, suspension polymerization, emulsion polymerization, and solution polymerization. Of these, the polymerization method is preferably emulsion polymerization, which employs an aqueous medium as a polymerization medium. A known technique may be applied to emulsion polymerization. In one specific procedure, monomers are dispersed in an aqueous medium (preferably, water) in the presence of an emulsifying agent; performing polymerization in the presence of a polymerization initiator; and adding a polymerization terminator to terminate the polymerization after achievement of a target conversion of polymerization.

In production of the polymer (P), preferably used is a monomer mixture containing a conjugated diene compound and the monomer (mc) as monomers, and an aromatic vinyl compound as an optional component.

Examples of the emulsifying agent include an anionic surfactant, a nonionic surfactant, and an amphoteric surfactant. In order to prepare a stable emulsion dispersion liquid, an anionic surfactant is generally used. Examples of the anionic surfactant employed include a C≥10 long-chain fatty acid salt, a rosin acid salt, a linear-chain alkyl group-containing benzenesulfonic acid salt. Specific examples include K salts and Na salts of capric acid, lauric acid, myristic acid, palmitic acid, oleic acid, stearic acid, octylbenzenesulfonic acid, dodecylbenzenesulfonic acid, dodecyldiphenyl oxide sulfonic acid, and dodecyldiphenyl ether disullfonic acid. Alternatively, a fluorine-containing surfactant may also be

used. Such emulsifying agents may be used singly or in combination of two or more species.

As the polymerization initiator, a radical polymerization initiator or the like which is generally employed in emulsion polymerization may be used. Examples of the polymerization initiator include organic peroxides such as benzoyl peroxide, lauroyl peroxide, tert-butyl hydroperoxide, cumene hydroperoxide, pinane hydroperoxide, p-menthane hydroperoxide, trimethylbicycloheptyl hydroperoxide, di-tert-butyl peroxide, and dicumyl peroxide. Alternatively, there may be employed a diazo compound (typically, azobisisobutyronitrile), an inorganic peroxide (typically, potassium persulfate), and a redox-type catalyst (typically, a combination of such a peroxide and ferrous sulfate). Such polymerization initiators may be used singly or in combination of two or more species. The amount of polymerization initiator employed, with respect to the total amount of the monomer(s) (100 parts by mass of the monomers involved in polymerization), is generally 0.01 parts by mass or more, preferably 0.05 to 1.0 part by mass.

Upon polymerization, a chain-transfer agent may be used for regulating the molecular weight of the polymer (P). Examples of the chain-transfer agent include alkylmercaptans such as tert-dodecylmercaptan, and n-dodecylmercaptan; carbon tetrachloride; thioglycols, diterpene; terpinolene; $\gamma$-terpinene; and $\alpha$-methylstyrene dimer. Such chain-transfer agents may be used singly or in combination of two or more species. The amount of the chain-transfer agent employed, with respect to the total amount of the monomer(s) (100 parts by mass of the monomers involved in polymerization), is generally 0.05 parts by mass or more, preferably 0.1 to 15 parts by mass.

In emulsion polymerization, an additive may be appropriately added. Examples of the additive include chelating agents such as sodium ethylenediaminetetraacetate, glycine, and alanine; electrolytes such as potassium chloride, sodium phosphate, potassium phosphate, and potassium sulfate; activatoirs such as sodium formaldehyde sulfoxylate and ferrous sulfate; pH-adjusters such as ammonia, sodium hydroxide, and potassium hydroxide; and oxygen-removers such as styrenized phenol, hindered phenol, imidazoles, p-phenylenediamine, and sodium hydrosullfite.

In production of the polymer (P) through emulsion polymerization, the mode of polymerization may be a continuous manner or a batch manner. In one possible mode, polymerization is conducted in a reactor from which oxygen has been removed and generally at 0 to 100°C, preferably at 0 to 80°C. The polymerization time is preferably 1 to 24 hours, more preferably 2 to 12 hours. In the course of reaction, operational conditions (e.g., temperature and stirring) and the like may be appropriately modified, and a part of monomers may be put into a reactor during polymerization.

In polymerization reaction, gelation may occur when the conversion of polymerization has increased. Thus, the conversion of polymerization is preferably controlled to be 85% or less, more preferably 80% or less. Particularly preferably, polymerization is terminated at a conversion of polymerization falling within a range of 30 to 70%. Polymerization may be terminated by adding a polymerization terminator when a target conversion of polymerization has been achieved. Examples of the polymerization terminator include hydroxylamine compounds such as hydroxylamine and N,N-diethylhydroxylamine, and quinone compounds such as hydroquinone. After termination of polymerization, if needed, unreacted monomers are removed from the reaction system through a technique such as steam distillation, to thereby yield a latex in which the polymer (P) is dispersed in a dispersion medium.

The polymer (P) obtained through the aforementioned polymerization process preferably has a weight average molecular weight (Mw) of $1.0\times10^5$ or higher. When Mw is $1.0\times10^5$ or higher, a cross-linked product (specifically, cross-linked rubber) formed from the polymer generally has sufficiently high dimensional stability, tensile strength, and wear resistance, which is preferred. The Mw of the polymer (P) is more preferably $1.2\times10^5$ or higher, still more preferably $1.5\times10^5$ or higher. Also, the Mw of the polymer (P) is preferably $1.0\times10^8$ or lower. When the Mw is $1.0\times10^8$ or less, sufficient processability of a polymer composition containing the polymer (P) can be generally secured, which is preferred. The Mw of the polymer (P) is more preferably $2.5\times10^7$ or lower, still more preferably $1.0\times10^7$ or lower, yet more preferably $2.0\times10^6$ or lower.

The range of preferred Mw of the polymer (P) may be set by appropriately choosing any of the aforementioned preferred upper limits and lower limits. The Mw of the polymer (P) preferably falls within a range of $1.0\times10^5$ to $1.0\times10^8$, more preferably $1.0\times10^5$ to $2.5\times10^7$, still more preferably $1.0\times10^5$ to $1.0\times10^7$, yet more preferably $1.0\times10^5$ to $2.0\times10^6$.

A molecular weight distribution (Mw/Mn) of the polymer (P), which is defined as a ratio of Mw to the number average molecular weight (Mn) of the polymer (P), is preferably 3.0 or greater, more preferably 3.2 or greater, from the viewpoint of ease of production. Also, the molecular weight distribution (Mw/Mn) is preferably 8.0 or smaller, from the viewpoint of enhancing various performances of a cross-linked product obtained from the polymer(P). In the present specification, the MW and Mn of the polymer (P) are values determined through gel permeation chromatography (GPC) and reduced to polystyrene.

The vinyl bond content of the polymer (P) is preferably 10 to 25 mass%. When the vinyl bond content is 10 mass% or more, the wet grip property of a cross-linked rubber obtained from the polymer (P) can be achieved at a sufficiently high level, which is preferred. Also, a vinyl bond content of 25 mass% or less is preferred, since a cross-linked rubber exhibiting suitable low fuel cost performance can be yielded. The vinyl bond content of the polymer (P) is more preferably 11 mass% or more, still more preferably 12 mass% or more, yet more preferably 13 mass% or more. Also, the vinyl bond content of the polymer (P) is more preferably 22 mass% or less, still more preferably 20 mass% or less, yet more preferably 18 mass% or less. Notably, in the present specification, the "vinyl bond content" is a relative amount of repeating units each having a 1,2-bond with respect to the total amount of the repeating units derived from butadiene in the polymer (P) and is a value determined by means of a $^1$H-NMR apparatus.

In an alternative method of producing the polymer (P) other than the aforementioned procedure, a conjugated diene compound, an optional aromatic vinyl compound, and a monomer having a reactive functional group (e.g., (meth) acrylic acid) are co-polymerized to form a copolymer, and then, the copolymer is reacted with a compound which has a group that can react with the aforementioned reactive functional group and which has a hydroxy group at a carbon atom adjacent to the reactable group, to thereby yield the polymer (P).

<<Polymer composition>>

A polymer composition for producing a cross-linked product (cross-linked rubber) for use in tires and the like can be yielded by adding a cross-linking agent or the like to the polymer (P). The polymer composition may further contain a filler (reinforcing filler) and other rubber components and the like.

(Cross-linking agent)

Examples of the cross-linking agent incorporated into the polymer composition of the present disclosure include sulfur, halogenated sulfur, an organic peroxide, a quinonedioxime, an organic polyvalent amine compound, and an alkylphenol resin having a methylol group. Generally, sulfur is used. The amount of sulfur incorporated into the composition, with respect to the total amount of the rubber components contained in the polymer composition as 100 parts by mass, is preferably 0.1 to 5 parts by mass, more preferably 0.5 to 3 parts by mass.

(Filler (reinforcing filler))

A reinforcing filler is used for enhancing the mechanical strength of a cross-linked product obtained through cross-linking of the polymer (P). Examples of the filler for reinforcing include silica; carbon black; an inorganic compound represented by the following formula (2) (hereinafter may also be referred to as an "inorganic compound (M)"; and reinforcing fibers (e.g., inorganic fiber such as glass fiber or carbon fiber; or organic fiber such as nylon or polyester fiber). Among them, the filler for reinforcing is preferably at least one species selected from the group consisting of silica, carbon black, and the inorganic compound (M).

$$nM^1 \cdot mSiO_k \cdot iH_2O \cdots \qquad (2)$$

(In the formula (2), $M^1$ represents at least one species selected from the group consisting of a particular metal (i.e., any of aluminum, magnesium, titanium, and calcium), an oxide of the particular metal, and a hydroxide of the particular metal; n is an integer of 1 to 5; m is an integer of 0 to 10; k is an integer of 2 to 10; and i is an integer of 0 to 10.)

Examples of the silica include wet silica (hydrous silicic acid), dry silica (anhydrous silicic acid), colloidal silica, precipitated silica, calcium silicate, and aluminum silicate). Among them, wet silica is particularly preferred, from the viewpoints of the effect of improving break properties of cross-linked rubber, and achieving both wet grip property and low hysteresis loss property (i.e., low rolling resistance). Also, use of high dispersible type silica is preferred, from the viewpoints of achieving suitable dispersibility in the polymer composition and enhancing physical properties and processability. Notably, such silica products may be used singly or in combination of two or more species. No particular limitation is imposed on the carbon black product, and examples thereof include GPF, FEF, HAF, ISAF, and SAF. Also, to the polymer composition, any of various reinforcing fillers (e.g., clay and calcium carbonate) may further be added as inorganic fillers, in addition to silica and carbon black.

Specific examples of the inorganic compound (M) include aluminum oxide, alumina monohydrate, aluminum hydroxide, aluminum carbonate, aluminum silicate, aluminum calcium oxide (e.g., $Al_2O_3 \cdot CaO \cdot 2SiO_4$) (particular metal in compounds: aluminum); magnesium oxide, magnesium hydroxide, magnesium carbonate, magnesium silicate, magnesium calcium silicate ($CaMgSiO_4$), and talc (particular metal in compounds: magnesium); titanium oxide (particular metal in compound: titanium); and calcium oxide, calcium hydroxide, calcium carbonate, and calcium silicate (particular metal in compounds: calcium).

As the reinforcing filler, one member of silica, carbon black, and the inorganic compound (M) may be used singly, or two or more members may be used in combination. From the viewpoint of achieving high effect of improving tire properties in combination with a conjugated diene-based polymer, the polymer composition of the present disclosure preferably contains silica as a reinforcing filler, particularly preferably wet silica, dry silica, or colloidal silica. When the reinforcing filler is used, the relative amount of the reinforcing filler incorporated into the polymer composition (the total amount when two or more species are used), with respect to the total amount of the rubber component(s) contained in the polymer composition as 100 parts by mass, is preferably 25 to 130 parts by mass, more preferably 30 to 110 parts by mass.

(Additional rubber component)

To the polymer composition, a rubber component other than the polymer (P) (hereinafter may also be referred to as an "additional rubber component") may further be added. As uses herein, the term "rubber component" refers to a polymer that can provide, via curing or the like, a cured product exhibiting rubber elasticity. The cured product exhibits such a property that deformation is caused by small force at room temperature (e.g., deformation which is elongation at twice or more realized via stretching at room temperature), and the shape is rapidly returned to the quasi-original shape upon removal of force.

No particular limitation is imposed on the type of the additional rubber component, so long as the polymer does not include at least one of the repeating unit (a) and the repeating unit (c). Examples of the additional rubber component include butadiene rubber (BR, e.g., high-cis BR having a cis-1,4 bond content of 90% or more), styrenebutadiene rubber (SBR), natural rubber (NR), isoprene rubber (IR), styrene-isoprene copolymer rubber, butadiene-isoprene copolymer rubber, and modified SBR (e.g., nitrogen-containing SBR or terminal-modified SBR). The relative amount of the additional rubber component incorporated into the polymer composition, with respect to the total amount of the rubber components (i.e., the polymer (P) and the additional rubber component) contained in the polymer composition as 100 parts by mass, is preferably 70 parts by mass or less, more preferably 60 parts by mass or less, still more preferably 50 parts by mass or less.

In addition to the aforementioned components, the polymer composition may further contain any of various additives which are generally employed in a polymer composition for producing a cross-linked product (cross-linked rubber). Examples of such additives include an antioxidant, zinc flower, stearic acid, a softening agent, a vulcanization accelerator, a silane coupling agent, a compatibilizer, a vulcanization aid, process oil, a processing aid, and an anti-scorching agent. The relative amount of such additives incorporated into the polymer composition may be appropriately chosen, so long as the effects of the present disclosure are not impaired.

<<Production of polymer composition and cross-linked rubber>>

The polymer composition of the present disclosure can be produced by mixing (specifically, kneading) a rubber component with an optionally incorporated component (e.g., a reinforcing filler) by means of a kneader such as an open-mode kneader (e.g., a roller) or a closed-mode kneader (e.g., a Bunbury mixer).

In the kneading step, a rubber component including the polymer (P) and an additive other than vulcanization-related compounding agents (i.e., a cross-linking agent, a vulcanization accelerator, and a vulcanization aid) (hereinafter may also be referred to as a "first additive") are melt-kneaded by means of a kneader (first step). The first additive preferably includes at least a filler for reinforcing. The temperature of kneading employed in the first step is appropriately predetermined in accordance with the melting point, the glass transition temperature, etc. of the rubber component. Through the melt-kneading, the first additive is mixed with the rubber component, to thereby sufficiently achieve the effects including enhancing the mechanical strength of the vulcanized rubber product, providing suitable kneadability of the polymer composition, and preventing degradation of the rubber component due to radicals generated during kneading.

Subsequently, if needed, the temperature of the kneaded product obtained in the first step is returned to room temperature, and a vulcanization-related compounding agent is added thereto. The resultant mixture is melt-kneaded by means of a kneader (second step). The polymer composition obtained in the second step is molded and then cross-linked (i.e., vulcanized), to thereby yield a cross-linked rubber as a cross-linked product.

<<Cross-linked product and tire>>

The cross-linked product (specifically, cross-linked rubber) obtained from the polymer composition of the present disclosure is applicable to various rubber articles. Specific examples of such rubber articles include tire parts such as tire tread, under tread, carcass, sidewall, and bead; sealing materials such as packings, gaskets, weather strips, and O-rings; exterior/interior coating materials for vehicles including automobiles, marine vessels, aircraft, and trains; building materials; vibration-proof rubbers for industrial machines, facilities, etc.; hoses and hose covers such as diaphragms, rollers, radiator hoses, and air hoses; belts such as power-transmission belt; linings; dust boots; materials of medical apparatus; fenders; electric wire insulating materials; and other industrial products.

The cross-linked product formed by cross-linking of the polymer (P) has high mechanical strength and is resistive to a drop in mechanical strength by heat. Thus, the polymer (P) is particularly suitable for a material of one or both of treads and sidewalls of tires. According to the polymer (P), a thinner tire part can be realized by virtue of high mechanical strength of the rubber material, which is preferred from the viewpoint of achieving resource saving.

Production of tires may be carried out through a customary method. For example, the polymer (P) and an optionally incorporated component are kneaded by means of a kneader and formed into a sheet. According to a customary method, pieces of the sheet are disposed at specific sites and subjected to vulcanization molding, to thereby form at least one of a tread and a sidewall. Thus, a pneumatic tire is yielded.

According to the present embodiment which has been described in detail, the following means are provided.

[1] A conjugated diene-based polymer including a repeating unit (a) derived from a conjugated diene compound in a relative amount of 45 to 99 mass%; a repeating unit (b) derived from an aromatic vinyl compound in a relative amount of 0 to 40 mass%; and a repeating unit (c) derived from a monomer having a partial structure represented by the formula (1) in a relative amount of 1 to 30 mass%, each relative amount based on the entire mass of all the repeating units.
[2] A conjugated diene-based polymer according to [1], wherein $R^1$ in the aforementioned formula (1) is a single bond or a C1 to C20 linear-chain or branched alkanediyl group.
[3] A conjugated diene-based polymer according to [1] or [2], wherein the polymer has a weight average molecular weight (Mw), which has been determined through gel permeation chromatography and reduced to polystyrene, of 100,000 to 2,000,000.
[4] A polymer composition comprising a conjugated diene-based polymer as recited in any of [1] to [3], and a cross-linking agent.
[5] A polymer composition according to [4], which further contains a filler.
[6] A cross-linked product produced from a polymer composition as recited in [4] or [5].
[7] A tire employing a cross-linked product as recited in [6] at least a part thereof.

Examples

The present disclosure will next be described in detail by way of examples, which should not be construed as limiting the disclosure thereto. Unless otherwise specified, "part(s)" and "%" in the Examples and Comparative Examples are on a mass basis. Physical properties of each polymer were measured through the following methods.
[Repeating unit (c) content (%)], [bound styrene content (%)], and [vinyl bond content(%)]:
Determined by means of a 400 MHz $^1$H-NMR apparatus. When the cumulative value in a range of 6.0 to 7.5 ppm, that in a range of 5.1 to 6.0 ppm, that in a range of 4.5 to 5.1 ppm, and that in a range of 3.4 to 4.3 ppm are denoted by A, B, C, and D, respectively; the number of hydrogen atoms bound to a carbon atom adjacent to an oxygen atom is denoted by m; and the molecular weight of monomer (mc) forming the repeating unit (c) is denoted by M, the three contents were calculated by the following equations, respectively.

$$[\text{Repeating unit (c) content (\%)}] = (20D/m \times M)/(4A \times 104) + 5(2B + C) \times 54 + (20D/m) \times M\} \times 100$$

$$[\text{Bound styrene content (\%)}] = (4A \times 104)/\{(4A \times 104) + 5(2B + C) \times 54 + (20D/n) \times M\} \times 100$$

$$[\text{Vinyl bond content (\%)}] = 2C/(2C+B) \times 100$$

[Weight average molecular weight]: Determined from a retention time of a GPC curve obtained by means of a gel permeation chromatograph (HLC-8320GPC (tradename), product of Tosoh Corporation) and reduced to polystyrene.

(Measurement conditions)

Column: GMHXL (product of Tosoh Corporation). Two columns were connected.
Column temperature: 40°C
Mobile phase: Tetrahydrofuran
Flow rate: 0.4 mL/min
Sample concentration: 10 mg/20 mL

1. Synthesis of conjugated diene-based polymers

[Example 1: Synthesis of vicinal diol-containing conjugated diene-based polymer A]

To a reactor (capacity: 5 L) purged with nitrogen, there were added water (1.5 L), sodium didodecyl phenyl ether disulfonate (49 g), potassium chloride (1.24 g), sodium ethylenediaminetetraacetate (chelating agent) (0.35 g), and sodium hydrosulfite (0.35 g). Subsequently, sodium ethylenediamineacetate (0.44 g), ferrous sulfate (0.18 g), water (25

mL) containing sodium formaldehyde sulfoxylate (0.70 g), tert-dodecylmercaptan (2.45 g), 1,3-butadiene (512 g), styrene (181 g), and 2,3-dihydroxypropyl methacrylate (7 g) were fed to the reactor. The contents were stirred at 330 rpm, and the temperature of the contents in the reactor was adjusted to 10°C. Thereafter, pinane hydroperoxide (1.33 g) was added, to thereby initiate polymerization. Polymerization was conducted under control of temperature (10°C). When the conversion of polymerization reached 70%, 6.2% aqueous N,N-diethylhydroxylamine (4.94 mL) was added, to thereby terminate polymerization reaction. The reaction was transferred to a strip tank in which the pressure was reduced to -0.1 MPa. The tank was heated to 60°C where stripping was performed for 30 minutes, to thereby remove residual monomers. As a result, a latex was yielded.

Separately, calcium chloride (89 g) and potassium hydroxide (4.2 g) were added to hot water (50°C, 9.15 L) and dissolved, and the latex obtained through the above polymerization procedure was added to the resultant aqueous solution, to thereby solidify the rubber component. Then, the solid product was washed sequentially with water at 50°C, 50°C, and 20°C, and the rubber product was dried by means of a roller controlled at 130°C, to thereby yield a vicinal diol-containing conjugated diene-based polymer A.

[Example 2: Synthesis of vicinal diol-containing conjugated diene-based polymer B]

The procedure of Example 1 was repeated, except that the polymerization formulation was altered; i.e., the amount of 1,3-butadiene was changed to 491 g, and the amount of 2,3-dihydroxypropyl methacrylate was changed to 28 g, to thereby yield a vicinal diol-containing conjugated diene-based polymer B.

[Example 3: Synthesis of vicinal diol-containing conjugated diene-based polymer C]

The procedure of Example 1 was repeated, except that the polymerization formulation was altered; i.e., the amount of 1,3-butadiene was changed to 309 g, and the amount of 2,3-dihydroxypropyl methacrylate was changed to 210 g, to thereby yield a vicinal diol-containing conjugated diene-based polymer C.

[Example 4: Synthesis of vicinal diol-containing conjugated diene-based polymer D]

The procedure of Example 1 was repeated, except that the polymerization formulation was altered; i.e., the amount of 1,3-butadiene was changed to 463 g, and 2,3-dihydroxypropyl methacrylate was changed to 9,10-dihydroxydecyl methacrylate (56 g), to thereby yield a vicinal diol-containing conjugated diene-based polymer D.

[Comparative Example 1: Synthesis of vicinal diol-containing conjugated diene-based polymer E]

The procedure of Example 1 was repeated, except that the amount of 1,3-butadiene was changed to 518 g, and the amount of 2,3-dihydroxypropyl methacrylate was changed to 1 g, to thereby yield a vicinal diol-containing conjugated diene-based polymer E.

[Comparative Example 2: Synthesis of vicinal diol-containing conjugated diene-based polymer F]

The procedure of Example 1 was repeated, except that the monomers and the amounts employed in polymerization were changed to 1,3-butadiene (239 g), styrene (181 g), and 2,3-dihydroxypropyl methacrylate (280 g), to thereby yield a vicinal diol-containing conjugated diene-based polymer F.

[Comparative Example 3: Synthesis of hydroxy-containing conjugated diene-based polymer G]

The procedure of Example 2 was repeated, except that the polymerization formulation was altered; i.e., 2,3-dihydroxypropyl methacrylate was changed to 3-hydroxypropyl methacrylate (28 g), to thereby yield a hydroxy-containing conjugated diene-based polymer G.

[Comparative Example 4: Synthesis of non-modified conjugated diene-based polymer H]

To a reactor (capacity: 100 L) purged with nitrogen, there were added water (36.8 L), sodium dodecyl diphenyl ether disulfonate (1,190 g), potassium chloride (6.7 g), sodium ethylenediaminetetraacetate (chelating agent) (8.5 g), and sodium hydrosulfite (8.5 g). Subsequently, sodium ethylenediamineacetate (10.6 g), ferrous sulfate (4.3 g), water (638 mL) containing sodium formaldehyde sulfoxylate (17.0 g), tert-dodecylmercaptan (51 g), 1,3-butadiene (11,883 g), and styrene (4,403 g) were fed to the reactor. The contents were stirred at 330 rpm, and the temperature of the contents in the reactor was adjusted to 10°C. Thereafter, pinane hydroperoxide (17.0 g) was added, to thereby initiate polymerization. Polymerization was conducted under control of temperature (10°C). When the conversion of polymerization reached 70%, 6.2% aqueous N,N-diethylhydroxylamine (1.65 L) was added, to thereby terminate polymerization reaction. The reaction was transferred to a strip tank in which the pressure was reduced to -0.1 MPa. The tank was heated to 60°C where stripping was performed for 30 minutes, to thereby remove residual monomers. As a result, a latex was yielded.

Separately, calcium chloride (1.79 kg) was added to hot water (50°C, 183 L) and dissolved, and the latex obtained through the above polymerization procedure was added to the resultant aqueous solution, to thereby solidify the rubber component. Then, the solid product was washed sequentially with water at 50°C, 50°C, and 20°C, and the rubber product was dried by means of a hot air blow drier controlled at 90°C, to thereby yield a non-modified conjugated diene-based polymer H.

2. Production and evaluation of polymer compositions and cross-linked products

[Examples 1 to 4 and Comparative Examples 1 to 4]

Using each of the above-produced conjugated diene-based polymers A to H, the components were blended according to the formulation shown in Table 1, and the resultant mixture was kneaded, to thereby prepare a polymer composition. Kneading was conducted in the following manner. Specifically, a conjugated diene-based polymer (each of A to H), a vulcanization accelerator, and sulfur were blended and kneaded by means of a plastomill (capacity: 250 mL) equipped with a temperature controller at a filling ratio of 72% and a rotation rate of 60 rpm. The thus-obtained polymer composition was molded and vulcanized at 160°C for a specific period of time by means of a vulcanization press, to thereby yield a cross-linked product (vulcanized rubber).

The thus-obtained cross-linked product (vulcanized rubber) was subjected to the following tensile test. Table 1 shows the results of the tensile test.

(Tensile test)

The tensile test was conducted in accordance with JIS K6251:2017 by use of dumbbell No. 3 samples. Tensile stress at 100% elongation (M100), tensile strength (TB), elongation at break (EB), and tensile product (=TB×EB) half value (=TB×EB/2) were determined.

[Table 1]

| | Example 1 | Example 2 | Example 3 | Example 4 | Comparative Example 1 | Comparative Example 2 | Comparative Example 3 | Comparative Example 4 | |
|---|---|---|---|---|---|---|---|---|---|
| Conjugated diene-based polymer | A | B | C | D | E | F | G | H | |
| Bound styrene content (wt%) | 23 | 22 | 21 | 21 | 23 | 20 | 23 | 23 | |
| Vinyl bond content (wt%) | 15 | 15 | 15 | 15 | 15 | 15 | 15 | 15 | |
| Mw ($\times 10^4$) | 35 | 30 | 24 | 36 | 57 | 32 | 44 | 95 | |
| Molecular weight distribution | 4.5 | 4.1 | 5.1 | 4.6 | 4.7 | 3.9 | 5.3 | 5 | |
| Repeating unit (c) content (wt%) | 1 | 4 | 30 | 8 | 0.2 | 40 | - | - | |
| Additional OH-containing repeating unit (wt%) | - | - | - | - | - | - | 4 | - | |
| Formulation | | | | | | | | | |
| Conjugated diene-based polymer | A (100) | B (100) | C (100) | D (100) | E (100) | F (100) | G (100) | I (100) | |
| Vulcanization accelerator CZ | | 1 | 1 | 1 | 1 | 1 | 1 | 1 | 1 |
| Sulfur | | 1 | 1 | 1 | 1 | 1 | 1 | 1 | 1 |
| Evaluation | | | | | | | | | |
| Cross-linked product of pure rubber | M100 (MPa) | 0.4 | 0.46 | 1.25 | 0.51 | 0.33 | 4.31 | 0.47 | 0.31 |
| | TB (MPa) | 3.07 | 4.01 | 10.5 | 4.3 | 0.95 | 5.11 | 2.35 | 0.72 |
| | EB (%) | 1970 | 1860 | 1530 | 2100 | 1200 | 650 | 1400 | 1000 |
| | (TB*EB)/2 | 3024 | 3729 | 8033 | 4515 | 570 | 1661 | 1645 | 360 |

The used ingredients shown in Table 1 are as follows. "Vulcanization accelerator CZ" is "Nocceler CZ" (tradename, product of Ouchi Shinko Chemical Industrial Co., Ltd.), and "Sulfur" is "Golden Flower Powder Sulfur 200 mesh" (tradename, product of Tsurumi Chemical Industry Co., Ltd.).

As shown in Table 1, cross-linked products formed from a conjugated diene-based polymer which included a specific amount of a structural unit having a partial structure bound to a carbon atom adjacent to two hydroxy groups were sound to exhibit mechanical strengths higher than those of cross-linked products of Comparative Examples.

In more precise investigation, the samples of Examples 1 to 4 were found to exhibit well-balanced high strengths; i.e., tensile stress (M100), tensile strength (TB), elongation at break (EB), and tensile product. In contrast, the cross-linked product of Comparative Example 1 produced from a conjugated diene-based polymer having a low repeating unit (c) content of 0.2%, and the cross-linked product of Comparative Example 4 produced from a conjugated diene-based polymer having no repeating unit (c) were found to exhibit tensile strength (TB), elongation at break (EB), and a tensile product lower than those of the samples of Examples 1 to 4, although the tensile stress (M100) was good. Also, the cross-linked product of Comparative Example 2 produced from a conjugated diene-based polymer having a high repeating unit (c) content of 40% was found to exhibit a high tensile stress (M100) and a low elongation at break (EB) and tensile product. The cross-linked product of Comparative Example 3 produced from a conjugated diene-based polymer including a repeating unit having only one hydroxy group instead of the repeating unit (c) was found to exhibit a tensile strength (TB) and a tensile product lower than those of the samples of Examples 1 to **4.**

<Production and evaluation of filler-containing polymer compositions and cross-linked product>

[Examples 5 to 9 and Comparative Examples 5 to 7]

Components were formulated as shown in Table 2, and the resultant mixture was kneaded, to thereby prepare a polymer composition containing fillers. Kneading was conducted in the following manner.

Specifically, in a first kneading step, a rubber component, fillers, a silane coupling agent, an extender oil, stearic acid, an antioxidant, zinc oxide were blended, and then kneaded by means of a batch mixer (tradename: Labo Plastomill, product of Toyo Seiki Seisaku-sho, Ltd.) equipped with a temperature controller (set temperature: 100°C) for 4 minutes at a filling ratio of 70% and a rotation rate of 60 rpm. In Examples 8 and 9 and Comparative Example 7, a resin was further added to a mixture to be kneaded.

Subsequently, in a second kneading step, the kneaded product obtained in the first kneading step was cooled to room temperature, and a vulcanization accelerator and sulfur were added to the above-mentioned mixer. The resultant mixture was kneaded by means of the mixer at a controlled temperature of 70°C and a rotation rate of 60 rpm for 1.5 minutes, to thereby yield each compound. In each case, the temperature of the kneaded product as discharged from the mixer was 100°C or lower. Then, the thus-obtained compound was subjected to vulcanization molding by means of a vulcanization press at 160°C for a specific period of time, to thereby yield a vulcanized rubber as a cross-linked product. The obtained vulcanized rubber samples were evaluated in terms of the following physical properties. Table 2 shows the result.

[Method of evaluating physical properties in relation to formulation]

·Mechanical strengths (TB×EB/2)

Tensile test of vulcanized rubber samples was conducted in accordance with JIS K6251:2010. In the tensile test, dumbbell No. 3 test samples were used, and tensile stress at break (TB, unit: MPa) and elongation at break (EB, unit: %) were measured at room temperature. In addition, the tensile product (=TB×EB) half value (=TB×EB/2) was calculated from the above measurements. The calculated value is an index based on the tensile product of Comparative Example 5 as 100 in the cases of Examples 5 and 6; an index based on the tensile product of Comparative Example 6 as 100 in the case of Example 7; and an index based on the tensile product of Comparative Example 7 as 100 in the cases of Examples 8 and 9. Table 2 shows the results. The greater the product, the higher the mechanical strength.

[Table 2]

| Formulation | | | Example 5 | Example 6 | Comparative Example 5 | Example 7 | Comparative Example 6 | Example 8 | Example 9 | Comparative Example 7 |
|---|---|---|---|---|---|---|---|---|---|---|
| Rubber component | Polymer (P) | Type | A | B | - | C | - | D | D | - |
| | | Amount | 70 | 40 | - | 30 | - | 70 | 50 | - |
| | Polymer H | | 0 | 30 | 70 | 0 | 30 | 0 | 20 | 70 |
| | BR *1) | | 30 | 30 | 30 | 30 | 30 | 0 | 0 | 0 |
| | NR | | 0 | 0 | 0 | 40 | 40 | 30 | 30 | 30 |
| Filler | Silica *2) | | 70 | 70 | 70 | 70 | 70 | 110 | 110 | 110 |
| | Carbon black *3) | | 5 | 5 | 5 | 5 | 5 | 5 | 5 | 5 |
| | Aluminum hydroxide *4) | | 0 | 0 | 0 | 0 | 0 | 1 | 1 | 1 |
| Additional component | Silane coupling agent *5) | | 5.6 | 5.6 | 5.6 | 5.6 | 5.6 | 8.8 | 8.8 | 8.8 |
| | Resin *6) | | 0 | 0 | 0 | 0 | 0 | 40 | 40 | 40 |
| | Extender oil *7) | | 30 | 30 | 30 | 30 | 30 | 5 | 5 | 5 |
| | Stearic acid | | 2 | 2 | 2 | 2 | 2 | 2 | 2 | 2 |
| | Zinc oxide | | 3 | 3 | 3 | 3 | 3 | 3 | 3 | 3 |
| | Antioxidant *8) | | 1 | 1 | 1 | 1 | 1 | 1 | 1 | 1 |
| Vulcanization type | Vulcanization accelerator D *9) | | 1.5 | 1.5 | 1.5 | 1.5 | 1.5 | 1.5 | 1.5 | 1.5 |
| | Vulcanization accelerator CZ *10) | | 1.8 | 1.8 | 1.8 | 1.8 | 1.8 | 1.8 | 1.8 | 1.8 |
| | Sulfur | | 1.5 | 1.5 | 1.5 | 1.5 | 1.5 | 1.5 | 1.5 | 1.5 |
| Evaluation | Strength ((TB*EB)/2) | | 154 | 136 | 100 | 127 | 100 | 161 | 142 | 100 |

The used agents and other ingredients shown in Table 2 are as follows. *1) BR01 (product of ENEOS Material), *2) ZEOSIL 1165MP (product of Solvay), *3) DIABLACK N330 (product of Mitsubishi Chemical Corporation), *4) "Higilite H-43M (trademark)" (product of Showa Denko K.K.), *5) Si75 (product of Evonik Industries), *6) T-REZ PR802 (product of ENEOS), *7) Process Oil T-DAE (product of ENEOS), *8) OZONONE 6C (product of Seiko Chemical Co., Ltd), *9) "Nocceler D" (product of Ouchi Shinko Chemical Industrial Co., Ltd.), *10) "Nocceler CZ-G" (product of Ouchi Shinko Chemical Industrial Co., Ltd.).

In Table 2, Polymers A to D and polymer H denote conjugated diene-based polymers synthesized in Examples 1 to 4 and Comparative Example 4, respectively.

As is clear from Table 2, the cross-linked products produced by blending the polymer (P), including a specific amount of a repeating unit derived from a monomer in which two hydroxy groups are bound to an adjacent carbon atom, with a filler or other additives, and cross-linking the resultant compound were found to exhibit mechanical strengths higher than those of cross-linked products of Comparative Examples employing only a polymer differing from the polymer(P) as a rubber component.

## Claims

1. A conjugated diene-based polymer comprising a repeating unit (a) derived from a conjugated diene compound in a relative amount of 45 to 99 mass%; a repeating unit (b) derived from an aromatic vinyl compound in a relative amount of 0 to 40 mass%; and a repeating unit (c) comprising a partial structure represented by formula (1) in a relative amount of 1 to 30 mass%, each relative amount based on the entire mass of all the repeating units.

[F1]

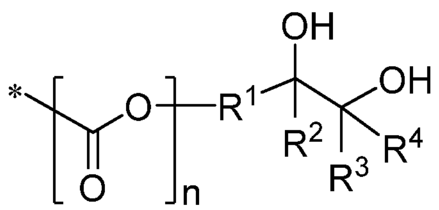

(1)

(In the formula (1), n is 0 or 1; $R^1$ represents a single bond or a C1 to C20 hydrocarbylene group; each of $R^2$ to $R^4$ independently represents hydrogen or a C1 to C20 hydrocarbyl group; and * represents a chemical bond to a polymer main chain.)

2. The conjugated diene-based polymer according to claim 1, wherein $R^1$ in the formula (1) is a single bond or a C1 to C20 linear-chain or branched alkanedilyl group.

3. The conjugated diene-based polymer according to claim 1 or 2, which has a weight average molecular weight (Mw), determined through gel permeation chromatography and reduced to polystyrene, of 100,000 to 2,000,000.

4. A polymer composition comprising the conjugated diene-based polymer according to claim 1, and a cross-linking agent.

5. The polymer composition according to claim 4, which further comprises a filler.

6. A cross-linked product produced from the polymer composition according to claim 4 or 5.

7. A tire employing the cross-linked product according to claim 6 at least a part thereof.

**INTERNATIONAL SEARCH REPORT**

International application No. **PCT/JP2023/033680**

**A. CLASSIFICATION OF SUBJECT MATTER**

***C08F 236/04***(2006.01)i; ***B60C 1/00***(2006.01)i; ***C08F 212/04***(2006.01)i; ***C08F 220/06***(2006.01)i; ***C08K 3/013***(2018.01)i; ***C08K 3/36***(2006.01)i; ***C08L 9/00***(2006.01)i
FI: C08F236/04; C08F220/06; C08F212/04; C08L9/00; C08K3/36; C08K3/013; B60C1/00 Z

According to International Patent Classification (IPC) or to both national classification and IPC

**B. FIELDS SEARCHED**

Minimum documentation searched (classification system followed by classification symbols)

C08F236/04; B60C1/00; C08F212/04; C08F220/06; C08K3/013; C08K3/36; C08L9/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | JP 5-310867 A (TERUMO CORP.) 22 November 1993 (1993-11-22) claim 1, paragraphs [0014], [0015], example 2, table 1 | 1-3 |
| A | WO 2016/043005 A1 (FUJIFILM CORP.) 24 March 2016 (2016-03-24) page 157, resin BP-4 | 1-7 |
| A | WO 2020/110793 A1 (CENTRAL GLASS CO., LTD.) 04 June 2020 (2020-06-04) paragraph [0931], fluorine-containing resin precursor 3-9 | 1-7 |
| A | SENSHU, Kazuhisa et al. Synthesis and Surface Characterization of Hydrophilic-Hydrophobic Block Copolymers Containing Poly(2,3-dihydroxypropyl methacrylate). Macromolecules. 1994, vol. 27, pages 4093-4100, https://doi.org/10.1021/ma00093a010 table 1 | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **02 November 2023** | **21 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/033680**

| Patent document cited in search report | Publication date (day/month/year) | Patent family member(s) | Publication date (day/month/year) |
| --- | --- | --- | --- |
| JP 5-310867 A | 22 November 1993 | (Family: none) | |
| WO 2016/043005 A1 | 24 March 2016 | TW 201619221 A | |
| WO 2020/110793 A1 | 04 June 2020 | US 2023/0027085 A1<br>paragraph [0931], fluorine-containing resin precursor 3-9<br>CN 113166294 A<br>KR 10-2021-0097737 A<br>TW 202030553 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022147890 A
- JP 2019182996 A
- JP 2004256801 A